# EUROPÄISCHE PATENTANMELDUNG

(11) **EP 1 239 461 A1**
(43) Veröffentlichungstag der Anmeldung: **11.09.2002**
(21) Anmeldenummer: 01105588.6
(22) Anmeldetag: 06.03.2001
(51) Int. Cl.: G10L 15/26, G10L 15/06

(54) **Verfahren zur Sprachenerkennung**

(71) Anmelder: SIEMENS AKTIENGESELLSCHAFT, 80333 München (DE)
(72) Erfinder: Harengel, Steffen, 80689 München (DE); Kunstmann, Niels, Dr., 85540 Haar (DE); Vogl, Reinhardt, 81739 München (DE)

(57) **Zusammenfassung**

Verfahren zur Spracherkennung bei dem während der Anwendungsphase die Nichterkennung eines eingesprochenen Wortes an einen Benutzer signalisiert und im Ansprechen auf einen Steuerbefehl ein Adaptionsvorgang ausgelöst und durchgeführt wird.

## Beschreibung

Die Erfindung betrifft ein Verfahren zur Spracherkennung nach dem Oberbegriff des Anspruchs 1.

Der Umgang mit verschiedenartigsten elektronischen Geräten gehört heute zum Alltag in den Industrieländern. Sie stellen seit längerem einen Gegenstand höchst dynamischer technischer und wirtschaftlicher Entwicklung dar. Neben stationären Audio- und Videogeräten und PCs haben tragbare und handgehaltene Geräte immer größere Bedeutung erlangt.

Bei den handgehaltenen Rechen- und Datenverarbeitungsgeräten der verschiedenen Anwendungsspezifikationen und Leistungsklassen - vom einfachen Taschenrechner über den programmierbaren Taschenrechner und einfachere Adreß- und Termindatenbanken bis hin zum höchstleistungsfähigen Handheld-PC bzw. PDA (Personal Digital Assistant) - hat sich eine rasante Entwicklung hin zu höherer Leistungsfähigkeit und Komplexität vollzogen.

Herausragende wirtschaftliche Bedeutung haben in den letzten Jahren bei den handgehaltenen elektronischen Geräten die Mobiltelefone erlangt. Auch hier ist eine höchst dynamische Entwicklung der Leistungsfähigkeit zu verzeichnen, die zu modernen Geräten mit einer Fülle von Komfortmerkmalen und Internetzugang per WAP (Wireless Application Protocol) geführt hat.

Die erheblich gestiegene Komplexität der Funktionen der erwähnten elektronischen Geräte hat bereits vor einiger Zeit zu einem Abgehen von der althergebrachten Bedienung über einfache Funktionstasten und zum verstärkten Einsatz sprachorientierter und/oder grafischer Benutzeroberflächen bzw. -schnittstellen geführt. Angeregt durch die dynamische Entwicklung und den Anwendungserfolg von Sprachsteuerungs- und Spracheingabesystemen bei PCs und im Einklang mit der zunehmenden Komplexität der erwähnten handgehaltenen Geräte, werden auch diese neuerdings verstärkt mit Sprachsteuerungsbzw. Eingabemöglichkeiten angeboten. Marktüblich sind bereits entsprechend ausgerüstete Fernbediengeräte - die allerdings nur über ein geringes Vokabular an Steuerworten verfügen - sowie Mobiltelefone, bei denen insbesondere Steuerfunktionen per Spracheingabe ausgelöst und Rufnummern angewählt werden können.

Bei den bisher bekannten Verfahren zur Spracherkennung ist grundsätzlich die sprecherunabhängige von der sprecherabhängigen Spracherkennung zu unterscheiden. Sprecherunabhängige Systeme arbeiten auf Phonem-Basis und nutzen Aussprachelexika als Wissensquelle für die Spracherkennung. Alle Phoneme sind in einem Hidden-Markov-Modell (HMM) akustisch modelliert, und im Aussprachelexikon wird für jedes Wort in einem bestimmten Format - beispielsweise dem sogenannten Sampa-Format - eine phonetische Transkription gespeichert. Die Spracherkennungsfähigkeit des Systems ist auf den in dem Aussprachelexikon gespeicherten Wortschatz beschränkt.

Sprecherabhängige Spracherkennungssysteme haben diese grundsätzliche Limitierung nicht, denn bei ihnen wird der zu erkennende Wortschatz durch den Benutzer in einer Trainingsphase eingesprochen. Dies hat auch den Vorteil einer gegenüber sprecherunabhängigen Systemen höheren Erkennungsgenauigkeit (natürlich nur bei dem Sprecher, der auch das Training ausgeführt hat). Der erforderliche Trainingsaufwand stellt andererseits natürlich einen Gebrauchswertnachteil für den Nutzer des Systems und somit auch von mit solchen Systemen ausgerüsteten Geräten dar.

Bei der Entwicklung moderner Spracherkennungssysteme, insbesondere für kleinere elektronische Geräte der oben genannten Art, versucht man einen ausgewogenen Kompromiß zwischen der Benutzerfreundlichkeit einerseits und einer hohen Erkennungsgenauigkeit und Erweiterbarkeit andererseits zu finden. Der Anwender wünscht sich ein Spracherkennungssystem, welches sofort - ohne vorhergehendes Training - einsatzbereit ist. Wünschenswert ist aber auch die Möglichkeit eines flexiblen Nachtrainierens von Teilen des Wortschatzes, deren zuverlässige Erkennung sich als problematisch erwiesen hat, sowie die Möglichkeit einer Ergänzung des Wortschatzes.

Auch derartige - sogenannte adaptive - Spracherkennungssysteme sind bereits bekannt.

Man kennt hier zum einen das Verfahren der HMM-Adaption, welches bei marktüblichen Diktiersystemen verwendet wird. Der Benutzer spricht im Rahmen eines sogenannten "Enrollment" vorgegebene Wörter bzw. Texte ein, woraufhin die Modellierung der Phoneme im HMM an die benutzerspezifische Aussprache angepaßt wird. Da hier eine Adaption auf Phonem-Ebene und nicht für ganze Worte erfolgt, kann eine Verbesserung der Erkennungsgenauigkeit auch für Worte erzielt werden, die gar nicht Bestandteil des Trainingssets waren. Nachteilig ist allerdings der relativ hohe Aufwand für die Präparation eines ausgewogenen Trainingsmaterials zur Erreichung einer optimalen Adaption bei der Modellierung der Phoneme.

Ein zweites bekanntes Verfahren ist das sogenannte SayIn-Verfahren. Hierbei spricht der Benutzer speziell und ausschließlich die zu adaptierenden Wörter ein. Ein HMM-Phonemerkenner liefert für jedes eingesprochene Wort eine zugehörige Phonemfolge, die dem Aussprachelexikon hinzugefügt wird. Bei diesem Verfahren sind einzelne Worte schnell trainierbar - das Training eines großen Ergänzungs-Wortschatzes ist jedoch mit hohem Aufwand verbunden, da jedes Wort desselben einzeln eingesprochen werden muß.

Der Erfindung liegt die Aufgabe zugrunde, ein in seinem Gebrauchswert für den Benutzer verbessertes Verfahren der gattungsgemäßen Art anzugeben, welches insbesondere einfach und schnell bedienbar ist und mit dem eine befriedigende Erkennungsgenauigkeit erreichbar ist.

Diese Aufgabe wird durch ein Verfahren mit den Merkmalen des Anspruchs 1 gelöst.

Die Erfindung schließt den grundlegenden Gedanken ein, eine Hybridlösung zwischen den oben genannten grundsätzlichen Spracherkennungsverfahren anzugeben, bei der die Grenzen der unterschiedlichen Prinzipien in der Handhabung für den Benutzer weitgehend verschwinden. Sie schließt weiter den Gedanken einer Integration von Trainings- und eigentlichem Erkennungsverfahren ein.

Ein sprecherunabhängiger vorgegebener Wortschatz wird als Basis verwendet, die eine sofortige Betriebsbereitschaft des Systems ohne vorangehendes Training sichert. Bei Erkennungsfehlern oder -lücken in der Anwendungsphase wird durch ein - in die Anwendung direkt integriertes - SayIn-Training ein sprecherabhängiges (Nach)Trainieren einzelner Worte realisiert. Hierbei wird, wenn ein eingesprochenes Wort falsch oder nicht hinreichend genau erkannt wurde, der entsprechende Aussprachelexikon-Eintrag durch eine sprecherabhängige Aussprache mit höherer Erkennungsgenauigkeit ersetzt.

Das vorgeschlagene Verfahren bietet vor allem folgende wesentliche Vorteile:
- schneller Einstieg in das System, da das System aufgrund des sprecherunabhängigen Wortschatzes auch ohne Training sofort funktionstüchtig ist.
- bessere Erkennung aufgrund des sprecherspezifischen Trainings
- Mischung von sprecherunabhängigem und sprecherspezifischem Wortschatz
- einfachere Bedienung, da Erkennung und Training in einem Ablauf erfolgen
- kein zusätzliches Einsprechen für das Training erforderlich. Es wird die gesprochene Äußerung der fehlgeschlagenen Erkennung verwendet.
- Für ein Sprachdialogsystem kann der Benutzer für ein zu a-daptierendes Wort ein für ihn geläufigeres Wort einsprechen, z. B.: "Post" statt "E-Mail". Dies ist für Anwendungstypen möglich, bei denen nicht das Wort ausgegeben wird, sondern eine Aktion stattfindet.

In einer zweckmäßigen Ausführung der Bedienoberfläche bzw. Benutzerschnittstelle ist die Signalisierung der Nichterkennung eines eingesprochenen Wortes per optischer (oder gegebenenenfalls auch akustischer) Menüführung vorgesehen. In deren Rahmen wird dem Benutzer zum Nachtrainieren eines nicht oder nicht hinreichend genau erkannten eingesprochenen Wortes mindestens ein Aussprachelexikon-Eintrag zur manuellen Auswahl angeboten oder die Möglichkeit der manuellen Eingabe eines (neuen) Wortes eröffnet.

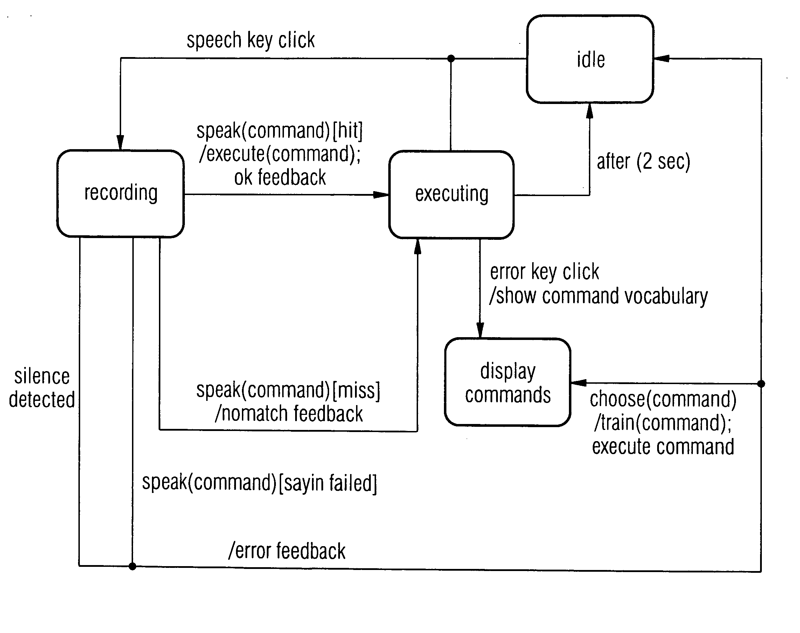

Vorteile und Zweckmäßigkeiten der Erfindung ergeben sich im übrigen aus den Unteransprüchen sowie der nachfolgenden Beschreibung eines zweckmäßiges Verfahrensablaufes sowie bevorzugter Ausführungsbeispiele anhand der einzigen Figur. Diese zeigt ein Programmablaufschema einer Ausführung des vorgeschlagenen Verfahrens, die speziell für ein (handgehaltenes) elektronisches Kleingerät geeignet ist.

Im Ausgangszustand, d. h. vor dem ersten sprecherabhängigen Training, ist ein sprecherunabhängiger Wortschatz verfügbar. Das System befindet sich nach der Initialisierung im Zustand "idle". Der Start des Spracherkennungssystems erfolgt per Tastendruck. Das System wechselt in den Zustand "recording". Der Benutzer spricht nun ein Wort bzw. eine Phrase in das System. Das Spracherkennungssystem kann daraufhin folgende Ergebnisse liefern:
Fall 1: Es gibt kein Erkennungsergebnis, da nichts gesprochen wurde ("silence detected"). Es erfolgt ein "error feedback" und das System wechselt in den Zustand "idle". Das System ist für den nächsten Erkennungsablauf bereit.
Fall 2: Es gibt kein Erkennungsergebnis, und die Äußerung ist nicht zum SayIn-Training geeignet. Dies kann bei Geräuschen oder anderen nichtsprachlichen Äußerungen passieren. Da ein Training mit dieser Äußerung nicht möglich ist, erfolgt ein "error feedback" und das System wechselt in den Zustand "idle".
Fall 3: Es gibt kein Erkennungsergebnis, aber die Äußerung ist zum Training geeignet (z. B.: Erkenner weist das gesprochene Wort zurück). Das System gibt ein "nomatch feedback" aus und wechselt in den Zustand "executing". Der Benutzer muß nun innerhalb einer festgelegten Zeitspanne (im Beispiel: 2 Sekunden) entscheiden, ob er ein Training durchführen will. Soll ein Training durchgeführt werden, drückt der Benutzer die Fehlertaste, ansonsten wechselt das System nach 2 Sekunden in den Zustand "idle".

Im Trainingsfall wählt der Benutzer das korrekte Wort (Kommando), welches gesprochen wurde, aus dem Lexikon aus. Mit Hilfe der zuvor eingesprochenen Äußerung, welche aufgenommen wurde, wird nun ein SayIn-Training durchgeführt. Aus der aufgezeichneten Äußerung wird hierbei eine Phonemfolge ermittelt. Es wird nun für das ausgewählte Wort (Kommando) die sprecherabhängige Phonemfolge in das Aussprache-Lexikon eingetragen.

Eine bereits vorher existierende sprecherabhängige Phonemfolge für dieses Wort kann - je nach konkreter Ausgestaltung des Verfahrens - im Aussprachelexikon verbleiben oder aus diesem gelöscht werden. Gegebenenfalls wird sie nur deaktiviert. In unserem Beispiel wird nun die ausgewählte Anwendung gestartet und in den Zustand "idle" gewechselt. Beim nächsten Erkennungsvorgang ist nun die neue sprecherspezifische Aussprache zusammen mit den anderen sprecherunabhängigen Aussprachen aktiv.

Je nach Designentscheidung kann das Training durch ein nochmaliges Sprechen des gewünschten Kommandos unterstützt werden (höhere Erkennungsgenauigkeit). In diesem Fall muß nach Auswahl der korrekten Zuordnung (choose commands) das Kommando wiederholt werden (nicht im Diagramm abgebildet).

Fall 4: Es gibt ein Erkennungsergebnis. Das System gibt ein "ok feedback" aus und startet die zugeordnete Anwendung. Anhand der gestarteten Anwendung kann der Benutzer beurteilen, ob das Erkennungsergebnis richtig oder falsch ist. Bei Feststellung einer falschen Erkennung kann er innerhalb der festgelegten Zeitspanne die Fehlertaste drücken und das SayIn-Training durchführen (weiter wie im Fall 3).

Die folgenden Tabellen geben für dieses Ausführungsbeispiel die Zustände, Ereignisse und Aktionen wieder.

| Zustände: | |
|---|---|
| **Zustand** | **Erklärung** |
| Display commands | Anzeigen einer Liste mit dem Vokabular |
| Executing | Man kann das Ergebnis eines vorhergehenden Sprachbefehls korrigieren |
| Idle | Die Spracherkennung ist nicht aktiv |
| Recording | Die Sprachaufnahme ist aktiv |

| Ereignisse: | |
|---|---|
| **Ereignis** | **Beschreibung** |
| After(2sec) | Nach zwei Sekunden Rückkehr in den Ausgangszustand |
| Choose command | Aus der Vokabularliste ist ein Kommando auszuwählen |
| Error key click | Betätigen der Korrekturtaste |
| Silence detected | Der Anwender spricht nichts, d. h. auch kein Erkennungsergebnis |
| Speak (command) [hit] | Erkennungsergebnis, von Benutzer zu überprüfen |
| Speak (command) [miss] | Kein Erkennungsergebnis, Äußerung zum Training geeignet |
| Speak (command) [sayin failed] | Kein Erkennungsergebnis, Äußerung nicht zum Training geeignet |
| Speech key click | Auslösen der Spracherkennung durch Tastaturevent; das ist auch im Zustand executing möglich, d. h. vor Rückkehr in den Zustand idle |

| Aktionen: | |
|---|---|
| **Aktion** | **Erklärung** |
| Error feedback | z. B. langer Piepston |
| Execute (command) | Ausführung des im Triggerevent angegebenen Kommandos |
| Nomatch feedback | z. B. kurzer Piepston |
| Ok feedback | z. B. positiver Quittungston, Feedback kann auch unterbleiben |
| Train (command) | Durchführen des SayIn-Trinings für das Kommando |
| Show command vocabulary | Anzeigen des Kommandowortschatzes, aus dem ausgewählt werden kann |

Als Anwendungsbeispiel der vorgeschlagenen Lösung wird ein PC bzw. PDA (Personal Digital Assistent) mit Spracherkennungssystem zur Systemsteuerung genannt.

Bei der Auslieferung besteht das Spracherkennungssystem aus einem sprecherunabhängigen Aussprachelexikon. Das Lexikon enthält Wörter, die den Anwendungen zugeordnet sind, die das System starten soll (z. B.: Erkennerbegriff "Word" mit der zugeordneten Anwendung "Microsoft Word"). In der Anwendungsphase spricht der Benutzer das Kommando. Wird nun die richtige Anwendung gestartet, dann ist der Vorgang erfolgreich beendet.

Im Fehlerfall, d. h. bei Zurückweisung des Erkenners bzw. bei falschem Erkennungsergebnis, teilt der Benutzer dem System den Fehler durch einen definierten Tastendruck mit, und das System führt daraufhin das Training durch. Im Ergebnis wird eine neue Phonemfolge dem Aussprache-Lexikon hinzugefügt bzw. - in einer Variante - die ursprüngliche (sprecherunabhängige) Phonemfolge durch die sprecherabhängige ersetzt. Bei der nächsten Erkennung dieses Kommandos sollte nun der Erkenner den Begriff erkennen und die Anwendung starten. Tritt erneut ein Fehler auf, wiederholt sich der obige Ablauf.

Ein weiteres wichtiges Anwendungsbeispiel der Erfindung ist ein Mobilfunk-Endgerät mit Hybrid-Spracherkennung. In dieses ist bei der Auslieferung eines sprecherunabhängige Spracherkennung als primäre Benutzerschnittstelle implementiert. Mit dieser sind mindestens die wichtigsten Menüpunkte zur Bedienung des Gerätes direkt aufrufbar, und es ist bevorzugt auch eine Nummernwahl durch ziffernweises Einsprechen von Rufnummern möglich.

Beim Handy kann das vorgeschlagene Verfahren zum Starten von Aktionen verwendet werden (z. B.: Erkennerbegriff: "Meldungen" ruft die Aktion "eingegangene SMS-Meldungen abrufen" auf). Hierbei entspricht der Ablauf für Erkennung und Training dem Beispiel "Starten von Applikationen auf dem PC oder PDA".

Weiterhin kann dieses System mit einem NameDialing (Namenswahl) kombiniert werden. Hierbei spricht der Benutzer für einen Telefonbucheintrag den Namen in einer Trainingsphase ein. Die aus dem SayIn-System resultierende Phonemfolge wird in dem selben Aussprache-Lexikon gespeichert, wie die Aktionswörter. Dadurch wird es möglich, daß alle Erkennerbegriffe (Aktionen und NameDialing) gleichzeitig aktiv sind. Beim Sprechen eines NameDialing-Namens ruft das Handy die zugeordnete Telefonnummer an.

Die Ausführung der Erfindung ist nicht auf die oben beschriebenen Ausführungen beschränkt, sondern im Rahmen der anhängenden Ansprüche in einer Vielzahl von Abwandlungen möglich, die im Rahmen fachgemäßen Handelns liegen.

## Patentansprüche

1. Verfahren zur Spracherkennung, insbesondere in einem kleinen elektronischen Gerät mit Mitteln zur Spracheingabe und - erkennung, welche zur Erkennung eines vorbestimmten Basiswortschatzes aufgrund einer phonetischen Modellierung und zur Ergänzung des Basiswortschatzes durch Einsprechen neuer Worte und/oder zur Erhöhung der Erkennungsgenauigkeit von Worten des Basiswortschatzes durch Einsprechen dieser bekannten Worte durch den Nutzer ausgebildet sind, wobei für jedes eingesprochene Wort eine Sprachmerkmals-Vektorfolge in einem hochdimensionalen Merkmalsraum eines Hidden-Markov-Modells erzeugt und in einem Adaptionsvorgang ausgewertet wird,
**dadurch gekennzeichnet, daß**
während der Anwendungsphase die Nichterkennung eines eingesprochenen Wortes an einen Benutzer signalisiert und im Ansprechen auf einen Steuerbefehl ein Adaptionsvorgang ausgelöst und durchgeführt wird.

2. Verfahren nach Anspruch 1,
**dadurch gekennzeichnet, daß**
die Sprachmerkmals-Vektorfolge mit einer gespeicherten Phonem- oder Phonemsegmentfolge als Modellinformation abgetastet wird.

3. Verfahren nach Anspruch 2,
**dadurch gekennzeichnet, daß**
die Phonemsegmentfolgen zur Abtastung der Sprachmerkmals-Vektorfolge jeweils durch eine vorbestimmte Anzahl von Clusterzentren aus einem vorangehenden sprecherunabhängigen Training des Hidden-Markov-Modells repräsentiert sind.

4. Verfahren nach einem der vorangehenden Ansprüche,
**dadurch gekennzeichnet, daß**
die Signalisierung der Nichterkennung eines eingesprochenen Wortes und die Eingabe des Steuerbefehls im Rahmen einer optischen oder akustischen Menüführung erfolgen.

5. Verfahren nach Anspruch 4,
**dadurch gekennzeichnet, daß**
im Rahmen der Menüführung dem Benutzer mindestens ein Aussprachelexikon-Eintrag als potentielles Erkennungsergebnis des eingesprochenen Wortes zur Auswahl angezeigt wird.

6. Verfahren nach Anspruch 4 oder 5,
**dadurch gekennzeichnet, daß**
dem Benutzer im Rahmen der Menüführung eine manuelle Eingabe eines Erkennungsergebnisses für das eingesprochene Wort ermöglicht wird.
